# EUROPÄISCHE PATENTANMELDUNG

(11) **EP 1 284 361 A2**
(43) Veröffentlichungstag der Anmeldung: **19.02.2003**
(21) Anmeldenummer: 02014614.8
(22) Anmeldetag: 02.07.2002
(51) Int. Cl.: F02N 11/08, F02D 41/06, F02D 11/10, F02P 19/02

(54) **Verfahren und Vorrichtung für den Automatikstart eines Dieselmotors**

(30) Priorität: 15.08.2001 DE 10138997
(71) Anmelder: AUDI AG, 85045 Ingolstadt (DE)
(72) Erfinder: Streng, Christop, 74172 Neckarsulm (DE)

(57) **Zusammenfassung**

Die Erfindung betrifft ein Verfahren und eine Vorrichtung für den Automatikstart eines Dieselmotors, wobei bei Betätigung des Zündschlüssels (1) das Vorglühen (2) und das Drehen des Motors durch den Anlasser (3) in Gang gesetzt werden und wobei die Kraftstoffeinspritzung (4) frühestens freigegeben wird, wenn die zum Anspringen des Motors erforderliche Mindesttemperatur der Glühkerzen (2') erreicht ist.

Diese sollen dahingehend weitergebildet werden, dass die Zeitdauer und/oder der Energiebedarf für den Automatikstart verringert wird. Dies wird dadurch erreicht, dass bei Betätigung des Zündschlüssels (1) auch die Drosselklappe (5) für die Luftzufuhr zum Brennraum geschlossen wird und frühestens kurz vor der Freigabe der Kraftstoffeinspritzung (4) wieder geöffnet wird. Die Vorrichtung enthält eine entsprechend ausgebildete Steuerung (6).

## Beschreibung

Die Erfindung betrifft ein Verfahren für den Automatikstart eines Dieselmotors, wobei bei Betätigung des Zündschlüssels das Vorglühen und das Drehen des Motors durch den Anlasser in Gang gesetzt werden und wobei die Kraftstoffeinspritzung frühestens freigegeben wird, wenn die zum Anspringen des Motors erforderliche Mindesttemperatur der Glühkerzen erreicht ist.

Die Erfindung betrifft weiterhin eine Vorrichtung für den Automatikstart eines Dieselmotors zur Durchführung eines Verfahrens der vorgenannten Art, mit einer durch Betätigung des Zündschlüssels ansteuerbaren Steuerung, die derart ausgebildet ist, dass sie bei Betätigung des Zündschlüssels das Vorglühen und das Drehen des Motors durch den Anlasser in Gang setzt und die Kraftstoffeinspritzung frühestens dann freigibt, wenn die zum Anspringen des Motors erforderliche Mindesttemperatur der Glühkerzen erreicht ist.

Verfahren und Vorrichtung der genannten Art sind aus der DE 38 35 214 C2 bekannt. Mittels der dort genannten Ausgestaltungen wird ein Automatikstart eines Dieselmotors erzielt, bei dem der Motor durch die Zündschlüsselbetätigung gestartet werden kann, ohne dass eine Vorglühphase abgewartet werden muss. Dafür sind zur Erzeugung der hohen Temperatur in kürzester Zeit sehr leistungsstarke Glühkerzen und leistungsstarke Batterien erforderlich.

Der Erfindung liegt die Aufgabe zugrunde, die Zeitdauer und/oder den Energiebedarf für den Automatikstart zu verringern.

Bezüglich des Verfahrens wird die Aufgabe dadurch gelöst, dass bei Betätigung des Zündschlüssels auch die Drosselklappe für die Luftzufuhr zum Brennraum geschlossen wird und frühestens kurz vor der Freigabe der Kraftstoffeinspritzung wieder geöffnet wird.

Bezüglich der Vorrichtung wird die Aufgabe dadurch gelöst, dass die Steuerung derart ausgebildet ist, dass sie bei Betätigung des Zündschlüssels auch die Drosselklappe für die Luftzufuhr zum Brennraum schließt und frühestens kurz vor der Freigabe der Kraftstoffeinspritzung wieder öffnet.

Durch die Erfindung wird vermieden, dass während des Vorglühens der Brennraum mit kalter Luft beaufschlagt wird. Dadurch kann die zum Anspringen des Motors erforderliche Temperatur der Glühkerzen entweder schneller und/oder mit weniger Energieeinsatz erreicht werden. Es lässt sich also ein schnellerer Start des Motors, eine Erhöhung der Anlasserdrehzahl und/oder eine Entlastung der Batterie gegenüber dem bekannten Verfahren und der bekannten Vorrichtung erzielen. Durch das Schließen der Drosselklappe wird außerdem erreicht, dass weniger Luft in den Motor eintritt, die dann beim Durchdrehen des Motors in der ersten Startphase, also vor dem Einspritzen des Kraftstoffes auch nicht unnötigerweise verdichtet werden muss.

Die folgenden Weiterbildungen des Verfahrens und der Vorrichtung dienen einer weiteren Optimierung.

Vorzugsweise wird das Verfahren derart ausgebildet, dass der Beginn des Vorglühens und der Start des Anlassers derart zeitversetzt sind, dass die Stromspitzen zeitlich nicht zusammentreffen. Auf diese Weise wird vermieden, dass die Batterie einer zu großen Spitzenlast ausgesetzt wird. Dabei ist zweckmäßigerweise vorgesehen, dass der Start des Anlassers gegenüber dem Beginn des Vorglühens derart verzögert ist, dass die Vorglühstromspitze vor der Anlasserstromspitze liegt. Dadurch ist auch die recht kurze Anwärmzeit etwas verlängert.

Die Kraftstoffeinspritzung erfolgt vorzugsweise etwas oberhalb der Mindesttemperatur der Glühkerzen bei einer für die Zündung optimalen Temperatur.

Der Zeitpunkt der Öffnung der Drosselklappe, der kurz vor der Freigabe der Kraftstoffeinspritzung liegt, wird zweckmäßigerweise derart gewählt, dass mit der Kraftstoffeinspritzung für die Zündung optimale Druck- und Mischungsverhältnisse von Luft und Kraftstoff im Brennraum erzielt werden.

Die Vorrichtung wird in entsprechender Weise ausgebildet, indem die Steuerung derart ausgestaltet oder mit einem Programm eingerichtet ist, dass sie die vorgenannten Verfahrensschritte veranlassen kann. Dazu ist es weiterhin zweckmäßig, wenn die Steuerung mit einer Einrichtung zur Erfassung der Temperatur der Glühkerzen verbunden ist. Damit kann das Erreichen der optimalen Temperatur erfasst werden, auch wenn der Zeitpunkt zur Erreichung derselben durch die Außentemperatur bedingt unterschiedlich ist. Die Temperatur kann unmittelbar mit einem Temperatursensor erfasst werden. Da dies schwierig ist, wird eine mittelbare Erfassung, z. B. über die Stromaufnahme vorgezogen. Es kann auch die Außentemperatur erfasst werden und in Abhängigkeit von dieser eine Wartezeit bestimmt werden. Weiterhin lässt sich auch der Atmosphärendruck, der ebenfalls Einfluss hat, ermitteln und in die Bestimmung der Wartezeit einbeziehen. Selbstverständlich ist es auch möglich, weitere Parameter zu erfassen und in die Steuerung der verschiedenen Elemente der Vorrichtung einzubeziehen.

Für das Vorglühen wird zweckmäßigerweise ein Schnellglühsystem vorgesehen, das durch seine hohe Leistung derart schnell die Optimaltemperatur erreicht, dass sich die für die Inbetriebnahme des Dieselmotors erforderliche Zeit von der zum Anlassen eines Benzinmotors benötigten Zeit nicht mehr wesentlich unterscheidet.

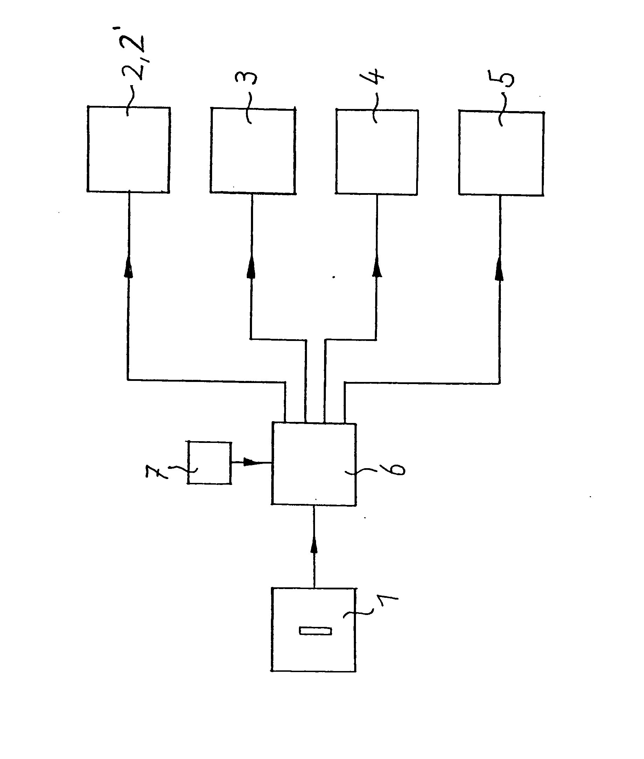

Ein schematisches Ausführungsbeispiel der Vorrichtung ist in der Zeichnung dargestellt. Ein Zündschloss 1 zur Zündschlüsselbetätigung wirkt auf eine Steuerung 6, welche in vorbeschriebener Weise mit den Glühkerzen 2' zum Vorglühen 2, dem Anlasser 3, der Kraftstoffeinspritzung 4 und der Drosselklappe 5 verbunden ist. Die Ansteuerung dieser Elemente durch die Steuerung 6 erfolgt in der bereits beschriebenen Art und Weise. Weiterhin ist es zweckmäßig, wenn eine Einrichtung zur Erfassung der Glühkerzentemperatur 7 mit der Steuerung 6 verbunden ist, um das Erreichen der optimalen Temperatur zu erfassen und dadurch die Steuerung 6 zu befähigen, die Kraftstoffeinspritzung 4 im richtigen Zeitpunkt vorzunehmen. Selbstverständlich kann die Steuerung 6 auch mit weiteren Sensoren zur Erfassung weiterer Parameter verbunden sein.

Die Erfindung zeigt lediglich die wesentlichen Verfahrens- und Vorrichtungsmerkmale, Weiterbildungen für eine differenzierte Berücksichtigung weiterer Parameter, um eine weitere Optimierung zu erreichen, sind selbstverständlich nicht ausgeschlossen.

### Bezugszeichenliste

- 1: Zündschlüsselbetätigung / Zündschloss
- 2, 2': Vorglühen / Glühkerzen
- 3: Anlasser
- 4: Kraftstoffeinspritzung
- 5: Drosselklappe
- 6: Steuerung
- 7: Einrichtung zur Erfassung der Glühkerzentemperatur

## Patentansprüche

1. Verfahren für den Automatikstart eines Dieselmotors, wobei bei Betätigung des Zündschlüssels (1) das Vorglühen (2) und das Drehen des Motors durch den Anlasser (3) in Gang gesetzt werden und wobei die Kraftstoffeinspritzung (4) frühestens freigegeben wird, wenn die zum Anspringen des Motors erforderliche Mindesttemperatur der Glühkerzen (2') erreicht ist,
**dadurch gekennzeichnet,**
**dass** bei Betätigung des Zündschlüssels (1) auch die Drosselklappe (5) für die Luftzufuhr zum Brennraum geschlossen wird und frühestens kurz vor der Freigabe der Kraftstoffeinspritzung (4) wieder geöffnet wird.

2. Verfahren nach Anspruch 1,
**dadurch gekennzeichnet,**
**dass** der Beginn des Vorglühens (2) und der Start des Anlassers (3) derart zeitversetzt sind, dass die Stromspitzen zeitlich nicht zusammentreffen.

3. Verfahren nach Anspruch 2,
**dadurch gekennzeichnet,**
**dass** der Start des Anlassers (3) gegenüber dem Beginn des Vorglühens (2) derart verzögert ist, dass die Vorglühstromspitze vor der Anlasserstromspitze liegt.

4. Verfahren nach einem der Ansprüche 1 bis 3,
**dadurch gekennzeichnet,**
**dass** die Kraftstoffeinspritzung (4) erfolgt, wenn die optimale Temperatur der Glühkerzen (2') für die Zündung erreicht ist.

5. Verfahren nach einem der Ansprüche 1 bis 4,
**dadurch gekennzeichnet,**
**dass** die Öffnung der Drosselklappe (5) zeitlich derart erfolgt, dass mit der Kraftstoffeinspritzung (4) für die Zündung optimale Druck- und Mischungsverhältnisse von Luft und Kraftstoff im Brennraum erzielt werden.

6. Vorrichtung für den Automatikstart eines Dieselmotors zur Durchführung eines Verfahrens nach einem der Ansprüche 1 bis 5 mit einer durch Betätigung des Zündschlüssels (1) ansteuerbaren Steuerung (6), die derart ausgebildet ist, dass sie bei Betätigung des Zündschlüssels (1) das Vorglühen (2) und das Drehen des Motors durch den Anlasser (3) in Gang setzt und die Kraftstoffeinspritzung (4) frühestens dann freigibt, wenn die zum Anspringen des Motors erforderliche Mindesttemperatur der Glühkerzen (2') erreicht ist,
**dadurch gekennzeichnet,**
**dass** die Steuerung (6) derart ausgebildet ist, dass sie bei Betätigung des Zündschlüssels (1) auch die Drosselklappe (5) für die Luftzufuhr zum Brennraum schließt und frühestens kurz vor der Freigabe der Kraftstoffeinspritzung (4) wieder öffnet.

7. Vorrichtung nach Anspruch 6,
**dadurch gekennzeichnet,**
**dass** die Steuerung (6) mit einer Einrichtung (7) zur Erfassung der Temperatur der Glühkerzen (2') verbunden ist.

8. Vorrichtung nach Anspruch 6 oder 7,
**dadurch gekennzeichnet,**
**dass** das Vorglühen (2) mittels eines Schnellglühsystems erfolgt.
